# EUROPÄISCHE PATENTSCHRIFT

(11) **EP 3 785 936 B1**
(45) Veröffentlichungstag und Bekanntmachung des Hinweises auf die Patenterteilung: **06.09.2023**
(21) Anmeldenummer: 20187132.4
(22) Anmeldetag: 22.07.2020
(51) Int. Cl.: B60C 9/20, B60C 9/00

(54) **FAHRZEUGLUFTREIFEN MIT MINDESTENS EINER FESTIGKEITSTRÄGERLAGE**
PNEUMATIC VEHICLE TYRE WITH AT LEAST ONE REINFORCEMENT LAYER
PNEUMATIQUES DE VÉHICULE POURVUS D'AU MOINS UNE COUCHE DE RENFORT

(30) Priorität: 30.08.2019 DE 102019213070
(43) Veröffentlichungstag der Anmeldung: 03.03.2021
(73) Patentinhaber: Continental Reifen Deutschland GmbH, 30165 Hannover (DE)
(72) Erfinder: Römer, Justus, 30419 Hannover (DE); Wanka, Thomas, 30419 Hannover (DE)
(74) Vertreter: Continental Corporation

(56) Entgegenhaltungen:
- WO-A1-2017/013576
- DE-A1-102015 209 343
- JP-A- H04 328 002
- JP-A- 2013 189 127

## Beschreibung

Die Erfindung betrifft einen Fahrzeugluftreifen in Radialbauart mit einem zumindest eine Festigkeitsträgerlage aufweisenden Gürtel, wobei die Festigkeitsträgerlage in ihrer flächigen Erstreckung nebeneinander weitgehend parallel zueinander angeordnete in elastomeres Material eingebettete Festigkeitsträger aufweist.

Üblich sind Festigkeitsträger der Festigkeitsträgerlagen mit weitgehend rundem Querschnitt, die in ihrer Lage nebeneinander weitgehend parallel zueinander angeordnet sind.

Zur Erhöhung der Durchstichfestigkeit des Gürtels ist es aus der DE 102015209343 A1 bekannt, die Stahlquerschnittsfläche durch den Einsatz von nebeneinander und beabstandet angeordneten Festigkeitsträgern mit abgeflachtem Querschnitt zu verbessern, wobei die Abflachung parallel zur flächigen Erstreckung der Festigkeitsträgerlage ausgerichtet ist.

Eine gegenseitige Interaktion zwischen benachbarten Festigkeitsträgern ist aber auch hier nur bedingt möglich. Kräfte, insbesondere Kräfte in radialer Richtung, wie sie beispielsweise bei penetrierenden Fahrbahnhindernissen wie Steinen oder anderen scharfen oder spitzen Gegenständen auf den Gürtel einwirken können, können somit nur schlecht übertragen werden.

Weitere Formen benachbarter Festigkeitsträger sind aus WO 2017/013576 A1, JP 2013 189127 A und JP H04 328002 A bekannt.

Aufgabe ist es somit, die Durchstichfestigkeit des Gürtels weiter zu verbessern.

Die Aufgabe wird gelöst durch einen Fahrzeugluftreifen nach einem der Ansprüche 1-3.

Indem zumindest ein Paar aus zwei benachbarten Festigkeitsträgern der Festigkeitsträger an ihren einander zugeneigten Seiten einander zugeneigte weitgehend parallel zueinander ausgerichtete Flächen aufweisen und indem die Flächen der einander zugeneigten Seiten in radialer Richtung rR zumindest teilweise überlappend angeordnet sind, wobei im Überlappungsbereich eine erste Fläche der Flächen radial außerhalb einer zweiten Fläche der Flächen angeordnet ist, können die einander zugeneigten weitgehend parallel zueinander ausgerichteten Flächen zumindest im Überlappungsbereich Kräfte, insbesondere in radialer Richtung wirkende Kräfte, gegenseitig übertragen. Die Kraftübertragung kann dabei mittels des zwischen den Flächen angeordneten elastomeren Materials erfolgen.

Die radiale Richtung ist dabei die Richtung, die senkrecht zur flächigen Erstreckung der Festigkeitsträgerlage vom Inneren des Reifens nach außen weist. Im Zenit des Reifens steht die radiale Richtung senkrecht auf die Umlaufrichtung und die axiale Richtung. Eine radiale Kraft wirkt somit senkrecht zur flächigen Erstreckung der Festigkeitsträgerlage. Bei Einwirkung einer radialen Kraft von radial außen nach innen auf den die erste Fläche aufweisenden Festigkeitsträger wird dieser durch die weitgehend parallel dazu radial innerhalb angeordnete zweite Fläche des anderen Festigkeitsträgers gestützt.

Weiter ist in jedem Bereich der flächigen Erstreckung der Festigkeitsträgerlage Festigkeitsträgermaterial angeordnet. Im Vergleich dazu ist bei Lagen ohne Überlappungsbereich ein Durchstich zwischen den Festigkeitsträgern dadurch erleichtert, dass dort nur elastomeres Material angeordnet ist.

Hierdurch ist die Durchstichfestigkeit des Gürtels weiter verbessert.

Die beiden einander zugeneigten Seiten können dabei eine weitgehend gegengleiche Kontur aufweisen.

Vorteilhaft ist es, wenn alle benachbart angeordneten Festigkeitsträger der Festigkeitsträgerlage als entsprechendes Paar aus benachbarten Festigkeitsträgern ausgebildet sind. Dies ermöglicht einen einfachen Aufbau der Gürtellage bei gleichzeitig weiter verbesserter Durchstichfestigkeit.

Die Ausführungsform nach Anspruch 1 zeichnet sich dadurch aus, dass jede der einander zugeneigten Seiten der beiden benachbarten Festigkeitsträger eine erste Fläche und eine zweite Fläche aufweist.

Jede der beiden einander zugeneigten Seiten weist somit eine erste Fläche auf, die bei Einwirkung einer von radial außen auf den jeweiligen Festigkeitsträger einwirkenden Kraft durch eine zweite Fläche der jeweils anderen der einander zugeneigten Seiten eine Stützung erfahren kann. Hierdurch kann jeder der benachbarten Festigkeitsträger durch den jeweils anderen Festigkeitsträger abgestützt werden, wodurch die Durchstichfestigkeit weiter verbessert ist.

Die eine der beiden einander zugeneigten Seiten weist dabei eine im Querschnitt konkave Kontur, insbesondere eine im Querschnitt konkav-V-förmige Kontur auf. Die Öffnung ist dabei dem anderen Festigkeitsträger zugeneigt. Die andere der beiden einander zugeneigten Seiten weist dann eine im Querschnitt konvexe Kontur, insbesondere eine im Querschnitt konvex -V-förmige Kontur, auf. Die konvexe Ausstülpung, insbesondere die Spitze der konvex -V-förmigen Kontur, ist dabei dem anderen Festigkeitsträger zugeneigt. Die beiden Seiten weisen dabei eine weitgehend gegengleiche Kontur auf.

Die Ausführungsform nach Anspruch 2 zeichnet sich dadurch aus, dass der eine der beiden benachbarten Festigkeitsträger einen sich nach radial innen im Wesentlichen verjüngenden Querschnitt aufweist und der andere der beiden Festigkeitsträger einen sich nach radial außen im Wesentlichen verjüngenden Querschnitt aufweist, und beide benachbarte Festigkeitsträger eine weitgehend trapezoide Form aufweisen.

Der Festigkeitsträger mit dem nach radial innen verjüngenden Querschnitt wird bei Krafteinwirkung von radial außen durch den anderen Festigkeitsträger abgestützt. Sind alle benachbarten Festigkeitsträger derart ausgebildet, ist er durch die beiden benachbarten Festigkeitsträger abgestützt. Der oder die benachbarten Festigkeitsträger weisen eine im Vergleich zu ihrer Maximalabmessung geringere radial äußere Oberfläche auf, wodurch die Wahrscheinlichkeit der Krafteinwirkung durch Punktion auf diese Festigkeitsträger verringert ist. Gleichzeitig ist die radial innere Oberfläche dieser Festigkeitsträger relativ zur radial äußeren Oberfläche vergrößert. Hierdurch kann eine von radial außen wirkende Kraft auf eine größere Fläche verteilt auf den radial innerhalb des Festigkeitsträgers angeordneten Gummis übertragen werden, wodurch eine zusätzliche Stützwirkung des Festigkeitsträgers erfolgt.

Auch in diesem Ausführungsbeispiel ist somit die Durchstichfestigkeit weiter verbessert.

Als besonders geeignete einfache Querschnittsform hat sich eine weitgehend trapezförmige Form herausgestellt, wobei von einem konvexen Trapez ausgegangen wird. In diesem Fall können für benachbarte Festigkeitsträger die gleichen Festigkeitsträger verwendet werden, wobei jeweils einer der benachbarten Festigkeitsträger an der flächigen Erstreckung der Festigkeitsträgerlage gespiegelt angeordnet ist. Es ergibt sich somit eine alternierende Anordnung. Ein besonders einfacher Querschnitt ergibt sich, wenn das Trapez gleichschenklig ist.

Die Ausführungsform nach Anspruch 3 zeichnet sich dadurch aus, dass beide benachbarten Festigkeitsträger einen weitgehend parallelogrammförmigen Querschnitt aufweisen, wobei zwei der gegenüberliegenden Parallelogrammseiten parallel zur flächigen Erstreckung der Festigkeitsträgerlage ausgerichtet und länger als die zwei anderen Parallelogrammseiten ausgebildet sind.

Hierdurch kann bereits bei einem einfachen Querschnitt eine Stützwirkung erreicht werden. Jeder Festigkeitsträger wird durch einen benachbarten Festigkeitsträger gestützt.

Alle Festigkeitsträger können in ihrem Querschnitt gleich ausgebildet sein, wodurch sich ein besonders einfacher Lagenaufbau ergibt.

Eine weitere Ausführungsform zeichnet sich dadurch aus, dass die Festigkeitsträger einen zur radialen Richtung weitgehend symmetrischen Querschnitt aufweisen. Sind alle benachbart angeordneten Festigkeitsträger als entsprechende Festigkeitsträgerpaare ausgebildet, so ist eine alternierende Anordnung vorteilhaft.

Ein Festigkeitsträger mit einer ersten Fläche auf seiner einen Seite weist somit auch auf seiner zweiten Seite eine erste Fläche auf. Er ist somit bei Krafteinwirkung von radial außen von seinen beiden benachbarten Festigkeitsträgern gestützt.

Weist einer der Festigkeitsträger eine erste Fläche und eine zweite Fläche auf, z.B. bei einer konkaven oder konvexen Kontur einer Seite, so weisen alle Festigkeitsträger auf beiden Seiten erste und zweite Flächen auf, so dass jeder Festigkeitsträger bei Krafteinwirkung von radial außen durch beide benachbarte Festigkeitsträger gestützt ist.

Eine weitere Ausführungsform zeichnet sich dadurch aus, dass die beiden benachbarten Festigkeitsträger gleich ausgebildet und in der Orientierung ihres Querschnitts gleich angeordnet sind. Hierdurch ist eine besonders einfache Festigkeitsträgerlage ermöglicht. Die eine Seite des Festigkeitsträgers kann dabei zumindest teilweise gegengleich zur anderen Seite des Festigkeitsträgers ausgebildet sein.

Eine weitere Ausführungsform zeichnet sich dadurch aus, dass der Querschnitt der beiden benachbarten Festigkeitsträger weitgehend einem Polygon, insbesondere einem Viereck oder einem Sechseck, entspricht.

Mit solchen Formen lassen sich besonders leicht weitgehend gegengleiche Konturen realisieren. Vorteilhaft ist insbesondere ein trapezoider oder ein parallelogrammförmiger Querschnitt. Vorteilhaft ist auch ein Querschnitt, bei die Seiten jeweils einen weitgehend V-förmigen konkaven oder konvexen Verlauf haben.

Eine weitere Ausführungsform zeichnet sich dadurch aus, dass der Querschnitt der beiden benachbarten Festigkeitsträger eine abgeflachte Form aufweist, insbesondere dass die maximale Ausdehnung in der flächigen Erstreckung der Festigkeitsträgerlage um mindestens 1,5 mal größer ist als die maximale Ausdehnung in der dazu senkrechten Richtung.

Hierdurch ist eine geringe Höhe der Lage ermöglicht, wodurch der Rollwiderstand verbesserbar ist. Gleichzeitig ist die Andruckfläche jedes der beiden Festigkeitsträger auf den radial innenliegenden Gummi vergrößert, so dass auch hierdurch die Durchstichfestigkeit verbessert ist.

Eine weitere Ausführungsform zeichnet sich dadurch aus, dass die beiden benachbarten Festigkeitsträger Monofilamente sind.

Derartige Festigkeitsträger können auf einfache Art und Weise mit einem vorteilhaften Querschnitt erzeugt werden.

Eine weitere Ausführungsform zeichnet sich dadurch aus, dass die beiden benachbarten Festigkeitsträger Monofilamente aus Stahl sind.

Festigkeitsträger aus Stahl sind übliche Festigkeitsträger des Gürtels. Monofilamente aus Stahl sind besonders geeignet, da sie sich mit wohldefiniertem Querschnitt erzeugen lassen.

Es kann sich um einen Reifen für einen Personenkraftwagen, einen Van, ein SUV, einen Light-Truck, ein Nutzfahrzeug, ein Kraftrad oder einen Bus handeln.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen Querschnitt eines Fahrzeugluftreifens;
Fig. 2 bis Fig. 4 jeweils einen Querschnitt durch eine Festigkeitsträgerlage eines Gürtels.

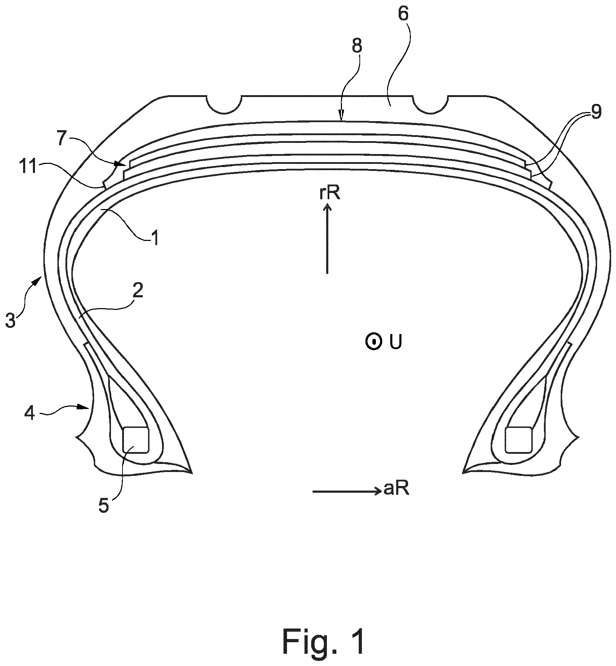

Die Figur 1 zeigt einen radialen Querschnitt durch einen Fahrzeugluftreifen, insbesondere für einen Reifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse befindlichen profilierten Laufstreifen 6 und einen zwischen dem Laufstreifen 6 und der Karkasse 2 angeordneten, zumindest zwei Festigkeitsträgerlagen 9 beinhaltenden Gürtel 7, welcher optional radial außen ganz oder teilweise mit der Gürtelbandage 8 abgedeckt ist.

Der Gürtel 7 weist zumindest zwei weitgehend übereinander angeordnete Festigkeitsträgerlagen 9 auf, wobei die Festigkeitsträgerlagen 9 in ihrer flächigen Erstreckung nebeneinander weitgehend parallel zueinander angeordnete in elastomeres Material 18 eingebettete Festigkeitsträger 10 aufweist. Die Festigkeitsträger 10 können durch das elastomere Material 18 voneinander beabstandet angeordnet sein. Die Erstreckungsrichtung der Festigkeitsträger 10 in den zwei dargestellten Festigkeitsträgerlagen 9 verlaufen in der einen Lage in spitzem Winkel zum Reifenumfang in der einen Richtung steigend, in der anderen Lage in spitzem Winkel zum Reifenumfang in der anderen Richtung steigend. Die Festigkeitsträgerlage 9 der optionalen Gürtelbandage 8 beinhaltet einen oder mehrere Festigkeitsträger, der oder die kontinuierlich entlang der axialen Breite in Windungen angeordnet ist oder sind.

Dargestellt ist ein Fahrzeugluftreifen aufweisend einen Gürtel 7 mit zwei Festigkeitsträgerlagen 9. Hierbei handelt es sich bevorzugt um einen Personenkraftwagen. Der Gürtel 7 kann aber auch mehr Lagen 9 aufweisen, insbesondere drei oder vier Lagen 9 aufweisen. Ein zumindest dreilagiger oder zumindest vierlagiger Gürtel ist üblich bei Van oder Nutzfahrzeugreifen.

Erfindungsgemäß weist der Gürtel 7 zumindest eine Festigkeitsträgerlage 9 mit zumindest einem Paar aus zwei benachbarten Festigkeitsträgern 11, 12 der Festigkeitsträger 10 auf, wobei die zumindest zwei benachbarten Festigkeitsträger 11, 12 der Festigkeitsträger 10 an ihren einander zugeneigten Seiten 13, 14 einander zugeneigte weitgehend parallel zueinander ausgerichtete Flächen 15, 16 aufweisen. Die Flächen 15, 16 der einander zugeneigten Seiten 13, 14 sind dabei in radialer Richtung rR zumindest teilweise überlappend angeordnet, wobei im Überlappungsbereich 17 eine erste Fläche 15 der Flächen 15, 16 radial außerhalb einer zweiten Fläche 16 der Flächen 15, 16 angeordnet ist.

Die beiden Flächen 15, 16 können dabei jeweils eine weitgehend gegengleiche Kontur aufweisen.

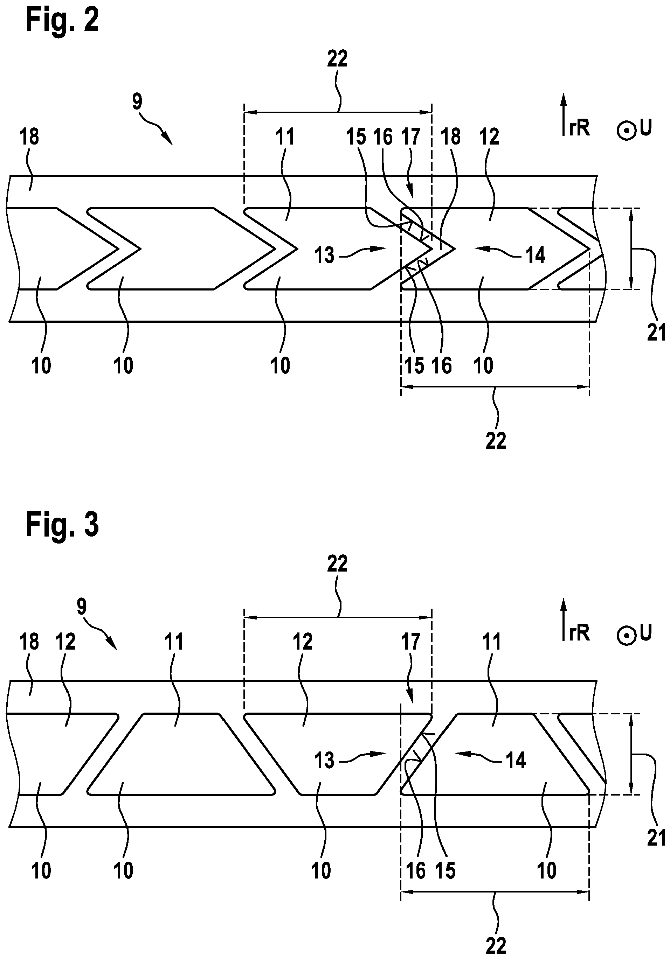

Der Querschnitt der Festigkeitsträger kann eine abgeflachte Form aufweisen. Insbesondere kann die maximale Ausdehnung 22 des Querschnitts parallel zur flächigen Erstreckung der Festigkeitsträgerlage um mindestens 1,5 mal größer sein als die maximale Ausdehnung 21 in der dazu senkrechten Richtung. Beispiele hierzu sind in den Figuren 2 bis 4 dargestellt.

Bevorzugt sind die Festigkeitsträger 10 der Festigkeitsträgerlage 9 Monofilamente. Besonders bevorzugt handelt es sich um Monofilamente aus Stahl.

Die Figuren 2 bis 4 zeigen jeweils einen Querschnitt durch eine Festigkeitsträgerlage 9 eines Gürtels 8 eines erfindungsgemäßen Fahrzeugluftreifens. Es handelt sich dabei um eine vorbeschriebene Festigkeitsträgerlage 9, insbesondere eine Festigkeitsträgerlage 9 eines Gürtels 8 des in der Fig. 1 dargestellten Fahrzeugluftreifens. Eine, mehrere oder alle Festigkeitsträgerlagen 9 des Gürtels 8 eines Fahrzeugluftreifens können wie in einer der Figuren dargestellt ausgebildet sein. Ebenso und bevorzugt können, wie in den Abbildungen beispielhaft dargestellt, alle benachbart angeordneten Festigkeitsträger 10 der Festigkeitsträgerlage 9 als entsprechendes Paar aus zwei benachbarten Festigkeitsträgern 11,12 ausgebildet sein.

Die beiden benachbarten Festigkeitsträger 11, 12 der Festigkeitsträger 10 weisen dabei an ihren einander zugeneigten Seiten 13, 14 einander zugeneigte weitgehend parallel zueinander ausgerichtete Flächen 15, 16 auf, wobei die Flächen 15, 16 der einander zugeneigten Seiten 13, 14 in radialer Richtung rR zumindest teilweise überlappend angeordnet sind und wobei im Überlappungsbereich 17 eine erste Fläche15 der Flächen 15, 16 radial außerhalb einer zweiten Fläche16 der Flächen 15 angeordnet ist.

In der Figur 2 weist jede der einander zugeneigten Seiten 13, 14 der beiden benachbarten Festigkeitsträger 11, 12 sowohl eine erste Fläche 15 als auch eine zweite Fläche 16 auf. Die Seite 14 des Festigkeitsträgers 12 weist dabei eine im Querschnitt konkave Kontur auf, insbesondere eine im Querschnitt konkav-V-förmige Kontur auf. Die Öffnung ist dabei dem anderen Festigkeitsträger 11 zugeneigt. Die andere Seite 13 der beiden einander zugeneigten Seiten weist dann eine im Querschnitt konvexe Kontur, insbesondere eine im Querschnitt konvex-V-förmige Kontur, auf. Die konvex Ausstülpung, insbesondere die Spitze der konvex -V-förmigen Kontur, ist dabei dem anderen Festigkeitsträger zugeneigt. Die beiden Seiten 13, 14 können dabei eine weitgehend gegengleiche Kontur aufweisen.

Die beiden benachbarten Festigkeitsträger 11,12 sind gleich ausgebildet und in der Orientierung ihres Querschnitts gleich angeordnet. Die eine Seite des Festigkeitsträgers 11 kann dabei zumindest teilweise gegengleich zur anderen Seite des Festigkeitsträgers 12 ausgebildet sein.

Wie abgebildet kann der Querschnitt der beiden benachbarten Festigkeitsträger 11, 12 weitgehend einem Polygon, insbesondere einem Sechseck, entsprechen.

In der Figur 3 weist ein Festigkeitsträger 11 der beiden benachbarten Festigkeitsträger 11,12 einen sich nach radial innen im Wesentlichen verjüngenden Querschnitt und der andere Festigkeitsträger 12 der beiden benachbarten Festigkeitsträger 11,12 einen sich nach radial außen im Wesentlichen verjüngenden Querschnitt auf. Insbesondere weisen beide benachbarte Festigkeitsträger 11,12 eine weitgehend trapezoide Form, insbesondere eine gleichschenklig trapezoide Form. Es können somit für die beiden benachbarten Festigkeitsträger 11, 12 die gleichen Festigkeitsträger verwendet werden, wobei jeweils einer der beiden benachbarten Festigkeitsträger 11, 12 an der flächigen Erstreckung der Festigkeitsträgerlage 9 gespiegelt angeordnet ist.

In der Figur 3 weisen die zumindest zwei benachbarten Festigkeitsträger 11,12 einen zur radialen Richtung rR weitgehend symmetrischen Querschnitt auf, wobei der eine benachbarte Festigkeitsträger 11 einen ersten Querschnitt aufweist und der andere benachbarte Festigkeitsträger 12 einen zweiten Querschnitt aufweist und die benachbarten Festigkeitsträger 11,12 mit erstem Querschnitt und zweitem Querschnitt alternierend angeordnet sind.

Wie abgebildet kann der Querschnitt der beiden benachbarten Festigkeitsträger 11, 12 weitgehend einem Polygon, insbesondere einem Viereck, entsprechen.

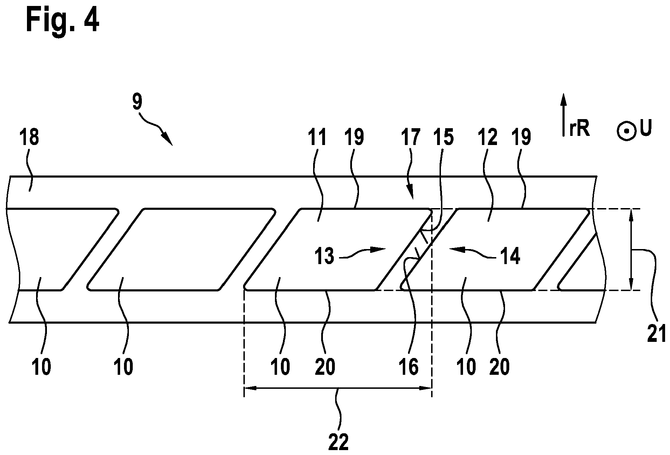

In der Figur 4 weisen beide benachbarte Festigkeitsträger 11,12 einen weitgehend parallelogrammförmigen Querschnitt auf, wobei zwei der gegenüberliegenden Parallelogrammseiten 19 parallel zur flächigen Erstreckung der Festigkeitsträgerlage 9 ausgerichtet und länger als die zwei anderen Parallelogrammseiten 20 ausgebildet sind. Hierbei können alle Festigkeitsträger 10 gleich ausgebildet sein.

Die beiden benachbarten Festigkeitsträger 11,12 sind gleich ausgebildet und in der Orientierung ihres Querschnitts gleich angeordnet. Die eine Seite des Festigkeitsträgers 11 ist dabei zumindest teilweise gegengleich zur anderen Seite des Festigkeitsträgers 12 ausgebildet.

Wie abgebildet kann der Querschnitt der beiden benachbarten Festigkeitsträger 11, 12 weitgehend einem Polygon, insbesondere einem Viereck, entsprechen.

### Bezugszeichenliste

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Festigkeitsträgerlage
- 10: Festigkeitsträger
- 11, 12: benachbarter Festigkeitsträger
- 13, 14: einander zugeneigte Seiten
- 15: erste Fläche
- 16: zweite Fläche
- 17: Überlappungsbereich
- 18: elastomeres Material
- 19: Parallelogrammseite
- 20: Parallelogrammseite

## Patentansprüche

1. Fahrzeugluftreifen in Radialbauart mit einem zumindest eine Festigkeitsträgerlage (9) aufweisenden Gürtel (8), wobei die Festigkeitsträgerlage (9) in ihrer flächigen Erstreckung nebeneinander weitgehend parallel zueinander angeordnete in elastomerem Material (18) eingebettete Festigkeitsträger (10) aufweist,
• wobei zumindest ein Paar aus zwei benachbarten Festigkeitsträgern (11, 12) der Festigkeitsträger (10) an ihren einander zugeneigten Seiten (13, 14) einander zugeneigte weitgehend parallel zueinander ausgerichtete Flächen (15, 16) aufweisen,
• wobei die Flächen (15, 16) der einander zugeneigten Seiten (13, 14) in einem Überlappungsbereich (17) in radialer Richtung rR zumindest teilweise überlappend angeordnet sind, wobei im Überlappungsbereich (17) eine erste Fläche (15) der Flächen (15, 16) radial außerhalb einer zweiten Fläche (16) der Flächen (15,16) angeordnet ist,
• wobei jede der einander zugeneigten Seiten (13,14) der beiden benachbarten Festigkeitsträger (11, 12) sowohl eine erste Fläche (15) als auch eine zweite Fläche (16) aufweist,
**dadurch gekennzeichnet,**
• **dass** die eine Seite (14) der beiden einander zugeneigten Seiten (13,14) eine im Querschnitt konkave Kontur, insbesondere eine im Querschnitt konkav-V-förmige Kontur, aufweist,
• **dass** die andere Seite (13) der beiden einander zugeneigten Seiten (13,14) eine im Querschnitt konvexe Kontur, insbesondere eine im Querschnitt konvex -V-förmige Kontur, aufweist,
• und **dass** die beiden Seiten (13,14) dabei eine weitgehend gegengleiche Kontur aufweisen.

2. Fahrzeugluftreifen in Radialbauart mit einem zumindest eine Festigkeitsträgerlage (9) aufweisenden Gürtel (8), wobei die Festigkeitsträgerlage (9) in ihrer flächigen Erstreckung nebeneinander weitgehend parallel zueinander angeordnete in elastomerem Material (18) eingebettete Festigkeitsträger (10) aufweist,
• wobei zumindest ein Paar aus zwei benachbarten Festigkeitsträgern (11, 12) der Festigkeitsträger (10) an ihren einander zugeneigten Seiten (13, 14) einander zugeneigte weitgehend parallel zueinander ausgerichtete Flächen (15, 16) aufweisen,
• wobei die Flächen (15, 16) der einander zugeneigten Seiten (13, 14) in einem Überlappungsbereich (17) in radialer Richtung rR zumindest teilweise überlappend angeordnet sind, wobei im Überlappungsbereich (17) eine erste Fläche (15) der Flächen (15, 16) einer Seite der Seiten (13, 14) radial außerhalb einer zweiten Fläche (16) der Flächen (15,16) angeordnet ist,
• dass ein Festigkeitsträger (11) der beiden benachbarten Festigkeitsträger (11,12) einen sich nach radial innen im Wesentlichen verjüngenden Querschnitt aufweist und dass der andere Festigkeitsträger (12) der beiden Festigkeitsträger (11,12) einen sich nach radial außen im Wesentlichen verjüngenden Querschnitt aufweist,
**dadurch gekennzeichnet, dass**
• beide benachbarten Festigkeitsträger (11,12) eine weitgehend trapezoide Form aufweisen,
• dass der Querschnitt der beiden benachbarten Festigkeitsträger (11, 12) eine abgeflachte Form aufweist und
• dass die maximale Ausdehnung (22) des Querschnitts parallel zur flächigen Erstreckung der Festigkeitsträgerlage (9) um mindestens 1,5 mal größer ist als die maximale Ausdehnung (21) in der dazu senkrechten Richtung.

3. Fahrzeugluftreifen in Radialbauart mit einem zumindest eine Festigkeitsträgerlage (9) aufweisenden Gürtel (8), wobei die Festigkeitsträgerlage (9) in ihrer flächigen Erstreckung nebeneinander weitgehend parallel zueinander angeordnete in elastomerem Material (18) eingebettete Festigkeitsträger (10) aufweist,
• wobei zumindest ein Paar aus zwei benachbarten Festigkeitsträgern (11, 12) der Festigkeitsträger (10) an ihren einander zugeneigten Seiten (13, 14) einander zugeneigte weitgehend parallel zueinander ausgerichtete Flächen (15, 16) aufweisen,
• wobei die Flächen (15, 16) der einander zugeneigten Seiten (13, 14) in einem Überlappungsbereich (17) in radialer Richtung rR zumindest teilweise überlappend angeordnet sind, wobei im Überlappungsbereich (17) eine erste Fläche (15) der Flächen (15, 16) radial außerhalb einer zweiten Fläche (16) der Flächen (15,16) angeordnet ist,
**dadurch gekennzeichnet, dass**
beide benachbarten Festigkeitsträger (11,12) einen weitgehend parallelogrammförmigen Querschnitt aufweisen, wobei zwei der gegenüberliegenden Parallelogrammseiten (19) parallel zur flächigen Erstreckung der Festigkeitsträgerlage (9) ausgerichtet und länger als die zwei anderen Parallelogrammseiten (20) ausgebildet sind.

4. Fahrzeugluftreifen nach Anspruch 1, 2 oder 3, **dadurch gekennzeichnet, dass** alle benachbart angeordneten Festigkeitsträger (10) der Festigkeitsträgerlage (9) als entsprechendes Paar aus zwei benachbarten Festigkeitsträgern (11, 12) ausgebildet sind.

5. Fahrzeugluftreifen nach Anspruch 2 oder 4, **dadurch gekennzeichnet, dass** die beiden benachbarten Festigkeitsträger (11,12) jeweils einen zur radialen Richtung rR weitgehend symmetrischen Querschnitt aufweisen.

6. Fahrzeugluftreifen nach Anspruch 1, 3 oder 4, **dadurch gekennzeichnet, dass** die beiden benachbarten Festigkeitsträger (11,12) gleich ausgebildet und in der Orientierung ihres Querschnitts gleich angeordnet sind.

7. Fahrzeugluftreifen nach einem oder mehreren der vorhergehenden Ansprüche, **dadurch gekennzeichnet, dass** der Querschnitt der beiden benachbarten Festigkeitsträger weitgehend einem Polygon, insbesondere einem Viereck oder einem Sechseck, entspricht.

8. Fahrzeugluftreifen nach einem oder mehreren der vorhergehenden Ansprüche außer Anspruch 2 oder einem davon abhängigen Anspruch, **dadurch gekennzeichnet, dass** der Querschnitt der beiden benachbarten Festigkeitsträger (11, 12) eine abgeflachte Form aufweist, insbesondere dass die maximale Ausdehnung (22) des Querschnitts parallel zur flächigen Erstreckung der Festigkeitsträgerlage (9) um mindestens 1,5 mal größer ist als die maximale Ausdehnung (21) in der dazu senkrechten Richtung.

9. Fahrzeugluftreifen nach einem oder mehreren der vorhergehenden Ansprüche, **dadurch gekennzeichnet, dass** die beiden benachbarten Festigkeitsträger (11, 12) Monofilamente sind.

10. Fahrzeugluftreifen nach einem oder mehreren der vorhergehenden Ansprüche, **dadurch gekennzeichnet, dass** die beiden benachbarten Festigkeitsträger (11, 12) Monofilamente aus Stahl sind.

## Claims

1. Pneumatic vehicle tyre of a radial type of construction, with a belt (8) having at least one strengthening member ply (9), wherein the strengthening member ply (9) has strengthening members (10) which are arranged next to one another and largely parallel to one another in its two-dimensional extent and embedded in elastomeric material (18),
• wherein at least one pair of two adjacent strengthening members (11, 12) of the strengthening members (10) have on their sides (13, 14) which are inclined to one another surface areas (15, 16) which are inclined to one another and oriented largely parallel to one another,
• wherein the surface areas (15, 16) of the sides (13, 14) which are inclined to one another are arranged so as to at least partially overlap in a radial direction rR in an overlapping region (17), wherein a first surface area (15) of the surface areas (15, 16) is arranged radially outside a second surface area (16) of the surface areas (15, 16) in the overlapping region (17),
• wherein each of those sides (13, 14) of the two adjacent strengthening members (11, 12) which are inclined to one another have both a first surface area (15) and a second surface area (16),
**characterized**
• **in that** one side (14) of the two sides (13, 14) inclined to one another has a cross-sectionally concave contour, in particular a cross-sectionally concavely V-shaped contour,
• **in that** the other side (13) of the two sides (13, 14) inclined to one another has a cross-sectionally convex contour, in particular a cross-sectionally convexly V-shaped contour,
• and **in that** the two sides (13, 14) in this case have a largely mirror-inverted contour.

2. Pneumatic vehicle tyre of a radial type of construction, with a belt (8) having at least one strengthening member ply (9), wherein the strengthening member ply (9) has strengthening members (10) which are arranged next to one another and largely parallel to one another in its two-dimensional extent and embedded in elastomeric material (18),
• wherein at least one pair of two adjacent strengthening members (11, 12) of the strengthening members (10) have on their sides (13, 14) which are inclined to one another surface areas (15, 16) which are inclined to one another and oriented largely parallel to one another,
• wherein the surface areas (15, 16) of the sides (13, 14) which are inclined to one another are arranged so as to at least partially overlap in a radial direction rR in an overlapping region (17), wherein a first surface area (15) of the surface areas (15, 16) of a side of the sides (13, 14) is arranged radially outside a second surface area (16) of the surface areas (15, 16) in the overlapping region (17),
• wherein one strengthening member (11) of the two adjacent strengthening members (11, 12) has a cross section which substantially tapers radially inwards, and in that the other strengthening member (12) of the two adjacent strengthening members (11, 12) has a cross section which substantially tapers radially outwards,
**characterized in that**
• both adjacent strengthening members (11, 12) have a largely trapeziform shape,
• **in that** the cross section of the two adjacent strengthening members (11, 12) has a flattened shape, and
• **in that** the maximum extent (22) of the cross section parallel to the two-dimensional extent of the strengthening member ply (9) is at least 1.5 times larger than the maximum extent (21) in the direction perpendicular thereto.

3. Pneumatic vehicle tyre of a radial type of construction, with a belt (8) having at least one strengthening member ply (9), wherein the strengthening member ply (9) has strengthening members (10) which are arranged next to one another and largely parallel to one another in its two-dimensional extent and embedded in elastomeric material (18),
• wherein at least one pair of two adjacent strengthening members (11, 12) of the strengthening members (10) have on their sides (13, 14) which are inclined to one another surface areas (15, 16) which are inclined to one another and oriented largely parallel to one another,
• wherein the surface areas (15, 16) of the sides (13, 14) which are inclined to one another are arranged so as to at least partially overlap in a radial direction rR in an overlapping region (17), wherein a first surface area (15) of the surface areas (15, 16) is arranged radially outside a second surface area (16) of the surface areas (15, 16) in the overlapping region (17),
**characterized in that**
both adjacent strengthening members (11, 12) have a cross section which is largely in the shape of a parallelogram, wherein two of the opposite parallelogram sides (19) are oriented parallel to the two-dimensional extent of the strengthening member ply (9) and are configured to be longer than the two other parallelogram sides (20).

4. Pneumatic vehicle tyre according to Claim 1, 2 or 3, **characterized in that** all the adjacently arranged strengthening members (10) of the strengthening member ply (9) are configured as a corresponding pair of two adjacent strengthening members (11, 12).

5. Pneumatic vehicle tyre according to Claim 2 or 4, **characterized in that** the two adjacent strengthening members (11, 12) each have a cross section which is largely symmetrical in relation to the radial direction rR.

6. Pneumatic vehicle tyre according to Claim 1, 3 or 4, **characterized in that** the two adjacent strengthening members (11, 12) are of identical form and are arranged in an identical manner in terms of the orientation of their cross section.

7. Pneumatic vehicle tyre according to one or more of the preceding claims, **characterized in that** the cross section of the two adjacent strengthening members corresponds largely to a polygon, in particular to a quadrilateral or a hexagon.

8. Pneumatic vehicle tyre according to one or more of the preceding claims apart from Claim 2 or a claim dependent thereon, **characterized in that** the cross section of the two adjacent strengthening members (11, 12) has a flattened shape, in particular **in that** the maximum extent (22) of the cross section parallel to the two-dimensional extent of the strengthening member ply (9) is at least 1.5 times larger than the maximum extent (21) in the direction perpendicular thereto.

9. Pneumatic vehicle tyre according to one or more of the preceding claims, **characterized in that** the two adjacent strengthening members (11, 12) are monofilaments.

10. Pneumatic vehicle tyre according to one or more of the preceding claims, **characterized in that** the two adjacent strengthening members (11, 12) are monofilaments composed of steel.

## Revendications

1. Pneumatique de véhicule à structure radiale comprenant une ceinture (8) présentant au moins une couche d'éléments de renfort (9), la couche d'éléments de renfort (9) présentant des éléments de renfort (10) disposés dans une large mesure parallèlement les uns aux autres de manière juxtaposée dans leur étendue plane et noyés dans une matière élastomère (18),
• au moins une paire constituée de deux éléments de renfort (11, 12) adjacents parmi les éléments de renfort (10) présentant, sur leurs côtés (13, 14) inclinés l'un vers l'autre, des surfaces (15, 16) tournées l'une vers l'autre orientées dans une large mesure parallèlement l'une à l'autre,
• les surfaces (15, 16) des côtés (13, 14) inclinés l'un vers l'autre étant disposées au moins partiellement en chevauchement dans la direction radiale rR dans une zone de chevauchement (17), une première surface (15) parmi les surfaces (15, 16) étant disposée radialement à l'extérieur d'une deuxième surface (16) parmi les surfaces (15, 16) dans la région de chevauchement (17),
• chacun des côtés (13, 14) inclinés l'un vers l'autre des deux éléments de renfort (11, 12) adjacents présentant à la fois une première surface (15) et une deuxième surface (16),
**caractérisé**
• **en ce que** l'un des côtés (14) des deux côtés (13, 14) inclinés l'un vers l'autre présente un contour concave en section transversale, en particulier un contour concave en forme de V en section transversale,
• **en ce que** l'autre côté (13) des deux côtés (13, 14) inclinés l'un vers l'autre présente un contour convexe en section transversale, en particulier un contour convexe en forme de V en section transversale,
• et **en ce que** les deux côtés (13, 14) présentent en l'occurrence un contour inversé dans une large mesure.

2. Pneumatique de véhicule à structure radiale comprenant une ceinture (8) présentant au moins une couche d'éléments de renfort (9), la couche d'éléments de renfort (9) présentant des éléments de renfort (10) disposés dans une large mesure parallèlement les uns aux autres de manière juxtaposée dans leur étendue plane et noyés dans une matière élastomère (18),
• au moins une paire constituée de deux éléments de renfort (11, 12) adjacents parmi les éléments de renfort (10) présentant, sur leurs côtés (13, 14) inclinés l'un vers l'autre, des surfaces (15, 16) tournées l'une vers l'autre orientées dans une large mesure parallèlement l'une à l'autre,
• les surfaces (15, 16) des côtés (13, 14) inclinés l'un vers l'autre étant disposées au moins partiellement en chevauchement dans la direction radiale rR dans une zone de chevauchement (17), une première surface (15) parmi les surfaces (15, 16) d'un côté parmi les côtés (13, 14) étant disposée radialement à l'extérieur d'une deuxième surface (16) parmi les surfaces (15, 16) dans la région de chevauchement (17),
• en ce qu'un élément de renfort (11) parmi les deux éléments de renfort (11, 12) adjacents présente une section transversale se rétrécissant sensiblement radialement vers l'intérieur et en ce que l'autre élément de renfort (12) des deux éléments de renfort (11, 12) présente une section transversale se rétrécissant sensiblement radialement vers l'extérieur,
**caractérisé en ce que**
• les deux éléments de renfort (11, 12) adjacents présentent une forme trapézoïdale dans une large mesure,
• **en ce que** la section transversale des deux éléments de renfort (11, 12) adjacents présente une forme aplatie et
• **en ce que** la dimension maximale (22) de la section transversale parallèlement à l'étendue plane de la couche d'éléments de renfort (9) est supérieure d'au moins 1,5 fois à la dimension maximale (21) dans la direction perpendiculaire à celle-ci.

3. Pneumatique de véhicule à structure radiale comprenant une ceinture (8) présentant au moins une couche d'éléments de renfort (9), la couche d'éléments de renfort (9) présentant des éléments de renfort (10) disposés dans une large mesure parallèlement les uns aux autres de manière juxtaposée dans leur étendue plane et noyés dans une matière élastomère (18),
• au moins une paire constituée de deux éléments de renfort (11, 12) adjacents parmi les éléments de renfort (10) présentant, sur leurs côtés (13, 14) inclinés l'un vers l'autre, des surfaces (15, 16) tournées l'une vers l'autre orientées dans une large mesure parallèlement l'une à l'autre,
• les surfaces (15, 16) des côtés (13, 14) inclinés l'un vers l'autre étant disposées au moins partiellement en chevauchement dans la direction radiale rR dans une zone de chevauchement (17), une première surface (15) parmi les surfaces (15, 16) étant disposée radialement à l'extérieur d'une deuxième surface (16) parmi les surfaces (15, 16) dans la région de chevauchement (17),
**caractérisé en ce que**
les deux éléments de renfort (11, 12) adjacents présentent une section transversale en forme de parallélogramme dans une large mesure, deux des côtés de parallélogramme (19) opposés étant orientés parallèlement à l'étendue plane de la couche d'éléments de renfort (9) et étant réalisés de manière plus longue que les deux autres côtés de parallélogramme (20).

4. Pneumatique de véhicule selon la revendication 1, 2 ou 3, **caractérisé en ce que** tous les éléments de renfort (10), disposés de manière adjacente, de la couche d'éléments de renfort (9) sont réalisés en tant que paire correspondante de deux éléments de renfort (11, 12) adjacents.

5. Pneumatique de véhicule selon la revendication 2 ou 4, **caractérisé en ce que** les deux éléments de renfort (11, 12) adjacents présentent respectivement une section transversale symétrique dans une large mesure par rapport à la direction radiale rR.

6. Pneumatique de véhicule selon la revendication 1, 3 ou 4, **caractérisé en ce que** les deux éléments de renfort (11, 12) adjacents sont réalisés de manière identique et sont disposés de manière identique en termes de l'orientation de leur section transversale.

7. Pneumatique de véhicule selon l'une ou plusieurs des revendications précédentes, **caractérisé en ce que** la section transversale des deux éléments de renfort adjacents correspond dans une large mesure à un polygone, en particulier à un quadrilatère ou à un hexagone.

8. Pneumatique de véhicule selon l'une ou plusieurs des revendications précédentes à l'exception de la revendication 2 ou d'une revendication dépendant de celle-ci,
**caractérisé en ce que** la section transversale des deux éléments de renfort (11, 12) adjacents présente une forme aplatie, en particulier **en ce que** la dimension maximale (22) de la section transversale parallèlement à l'étendue plane de la couche d'éléments de renfort (9) est supérieure d'au moins 1,5 fois à la dimension maximale (21) dans la direction perpendiculaire à celle-ci.

9. Pneumatique de véhicule selon l'une ou plusieurs des revendications précédentes, **caractérisé en ce que** les deux éléments de renfort (11, 12) adjacents sont des monofilaments.

10. Pneumatique de véhicule selon l'une ou plusieurs des revendications précédentes, **caractérisé en ce que** les deux éléments de renfort (11, 12) adjacents sont des monofilaments en acier.
